# EUROPEAN PATENT SPECIFICATION

(11) **EP 2 273 790 B1**
(45) Date of publication and mention of the grant of the patent: **14.09.2016**
(21) Application number: 08873933.9
(22) Date of filing: 26.12.2008
(51) Int. Cl.: H04N 7/18, G08B 13/196

(54) **A MONITORING METHOD AND TERMINAL USING DIFFERENT MONITORING PRECISIONS**
ÜBERWACHUNGSVERFAHREN UND ENDGERÄT ZUM VERWENDEN VERSCHIEDENER ÜBERWACHUNGSGENAUIGKEITEN
PROCÉDÉ ET TERMINAL DE SURVEILLANCE CAPABLES D ADOPTER DIFFÉRENTES PRÉCISIONS DE SURVEILLANCE

(30) Priority: 14.04.2008 CN 200810090183
(43) Date of publication of application: 12.01.2011
(73) Proprietor: ZTE Corporation, Shenzhen, Guangdong 518057 (CN)
(72) Inventor: TONG, Qingyi, Shenzhen Guangdong 518057 (CN)
(74) Representative: Vossius & Partner Patentanwälte Rechtsanwälte mbB
(86) International application number: PCT/CN2008/073781
(87) International publication number: WO 2009/127113

(56) References cited:
- WO-A1-03/045062
- WO-A1-03/091961
- WO-A1-2004/054223
- WO-A1-2007/066154
- CN-A- 1 487 677
- CN-A- 1 731 855
- CN-A- 101 252 680
- GB-A- 2 396 763
- US-A1- 2005 200 714
- US-A1- 2005 280 704
- US-A1- 2006 053 459
- LI, WEIXUAN ET AL.: 'An intelligent Automatic Monitoring Alarming System' TECHNIQUE OF AUTOMATION AND APPLICATIONS vol. 23, no. 8, 31 August 2004, pages 61 - 63, XP008145962
- ELENA STRINGA ET AL: "Requirements for Front-End Scene Change Detection Algorithms", INTERNATIONAL SAFEGUARDS WORKSHOP - SURVEILLANCE ROADMAPPING (HTTP://WWW.BNL.GOV/ISPO/BNLWORKSHOP03/TOC .HTM), 3 October 2003 (2003-10-03), XP055134733, http://www.bnl.gov/ispo/BNLWorkshop03/TOC. htm
- HORTON R D: "A target cueing and tracking system (TCATS) for smart video processing", 19901010; 19901010 - 19901012, 10 October 1990 (1990-10-10), pages 68-72, XP010079318,

## Description

### TECHNICAL FIELD

The present invention relates to the field of wireless communication technology, in particular to a monitoring method and terminal using different monitoring precisions.

### BACKGROUND OF THE INVENTION

Presently, traditional video monitoring systems including analogue monitoring and digital monitoring have been quite widely used, but the traditional video monitoring has some disadvantages by its nature, for instance, in the case when a monitored place is monitored, a specially assigned man should be on duty before the monitor. In some special situations, the monitoring cannot be implemented due to the limitation of the traditional video monitoring system, for example, in wild area where it is hard to build a network or a network has not been built yet, the traditional video monitoring system cannot be installed; in the situations such as a vehicle and a vessel during a long journey, a science investigation in wild area, a forest fire prevention and flood prevention, the objects to be monitored move at any time, thus the traditional video monitoring system cannot be used either; and in a company or at home, for the managers on a business trip or in the office, or for the employees having children or patients to be taken care of at home, they need to know what is going on in the company or at home at any time any place, which cannot be realized by the traditional monitoring system.

With the rapid development of the wireless network technology, in particular the application of the mobile network of the 3rd Generation (3G) Mobile Communication Technology, a kind of video monitoring system and terminal based on the mobile network emerges. One mobile terminal with a camera is placed at the monitored place. This mobile terminal, using an SIM (Subscriber Identity Module) card or a USIM (Universal Subscriber Identity Module) card as an identifier for identification, monitors the monitored place by the camera and gives an alarm to the manager (i.e. the user disposing this monitoring terminal) by a predetermined method (such as dialing video phone or sending MMS, etc.) when its warning condition is met by analyzing the image changes of the monitored place. The monitoring terminal judges whether the monitored placed is abnormal according to the changes (such as the changes between two adjacent frame images) of the video of the monitored place captured by the camera. To use such kind of terminal may raise different requirements at different time periods in some conditions, for example, when monitoring the domicile, if there is no body at home at daytime, high precision monitoring may be needed; but at night, since the family members have been back to home, if the monitor still make the monitoring with the same high sensitivity as at daytime, it may result in frequent alarms to the manager (family member). The unchangeable monitoring precision of the monitoring terminal will bring inconvenience to the user.

US 2006/0053459A1 discloses networked digital security system and methods. ELENA STRINGA ETA AL: "Requirement for Front-End Scene Change Detection Algorithms", INTERNATIONAL SAFEGUARDS WORKSHOP-SURVEILLANCE ROADMAPPING (http://bnl.gov/ispo/BNLWorkshop02/TOC.htm), 3 October 2003 (2003-10-03) discloses general consideration on scene change detection (SCD) techniques.

### SUMMARY OF THE INVENTION

The technical problem to be solved by the present invention is to provide a monitoring method and terminal using different monitoring precision, to make the monitoring precision of the monitoring terminal automatically adapt to different monitoring situations to improve the user experience.

In order to solve the above problem, the present invention provides a monitoring method using different monitoring precisions, including: a user sends, to a monitoring terminal, monitoring precision setting information which includes one or more time periods and monitoring precisions corresponding to respective time periods; and according to the received monitoring precision setting information, the monitoring terminal applies, in each time period indicated in the received monitoring precision setting information, the corresponding monitoring precision to monitor a monitored place, and gives an alarm to the user when an alarming condition is met.

Further, the monitoring precision includes high precision, medium precision and low precision; the monitoring terminal using the high precision for monitoring refers to giving an alarm to the user when judging the difference between two frame images captured by a camera with a time interval M set by a system exceeds an alarming threshold set by the system, or when judging the difference between two frame images captured by the camera with an interval of P frames exceeds the alarming threshold set by the system; the monitoring terminal using the medium precision for monitoring refers to giving an alarm to the user when judging the difference between two frame images captured by the camera with a time interval N set by the system exceeds the alarming threshold set by the system, or when judging the difference between two frame images captured by the camera with an interval of Q frames exceeds the alarming threshold set by the system; the monitoring terminal using the low precision for monitoring refers to stopping the monitoring and giving no alarm to the user; wherein, the value of M is smaller than N, the value of P is smaller than Q, and the values of M, N, P and Q are determined by the monitoring terminal.

Further, the difference between the two frame images is one of the following differences: a sum of differences of the pixel values of pixel points at respective corresponding positions in the two frame images; a sum of differences of the pixel values of pixel points at respective corresponding positions in a monitored region set by the system in the two frame images; a difference of the average values of the pixel values of respective pixel points in the two frame images; and a difference of the average values of the pixel values of respective pixel points in the monitored region set by the system in the two frame images.

Further, the user using one of the following manners to send the monitoring precision setting information to the monitoring terminal: sending a short message service message including the monitoring precision setting information to the terminal, sending a multimedia information service message including the monitoring precision setting information to the terminal; and the terminal gives an alarm to the user through one of the following manners: sending a multimedia information service message including an alarming information to the user, sending a short message service message including an alarming information to the user.

In order to solve the above problem, the present invention provides a monitoring terminal using different monitoring precision, comprising the following modules: a camera, a network function module, and a master controlling module; the camera being configured to acquire video image data of a monitored place and to transmit the same to the master controlling module; the network function module is configured to receive monitoring precision setting information of a user which includes one or more time periods and monitoring precisions corresponding to respective time periods, and to transmit the same to the master controlling module; the network function module is further configured to give an alarm to the user after receiving an alarming instruction from the master controlling module; and the master controlling module is configured to, according to the received monitoring precision setting information sent from the network function module, apply, in each time period indicated in the received monitoring precision setting information, the corresponding monitoring precision to process the video image data acquired by the camera, and to send the alarming instruction to the network function module when judging it meets an alarming condition.

Further, the monitoring precision includes three level values, namely, high precision, medium precision and low precision; the master controlling module is configured to, when using the high precision for monitoring, give an alarm to the user when judging the difference between two frame images captured by the camera with a time interval M set by a system exceeds an alarming threshold set by the system, or when judging the difference between two frame images captured by the camera with an interval of P frames exceeds the alarming threshold set by the system; the master controlling module is further configured to, when using the medium precision for monitoring, give an alarm to the user when judging the difference between two frame images captured by the camera with a time interval N set by the system exceeds the alarming threshold set by the system, or when judging the difference between two frame images captured by the camera with an interval of Q frames exceeds the alarming threshold set by the system; and the master controlling module is further configured to, when using the low precision for monitoring, stop monitoring and give no alarm to the user; wherein the value of M is smaller than N, the value of P is smaller than Q, and the values of M, N, P and Q are determined by the monitoring terminal.

Further, the difference between the two frame images is one of the following differences: a sum of differences of the pixel values of pixel points at respective corresponding positions in the two frame images; a sum of differences of the pixel values of pixel points at respective corresponding positions in a monitored region set by the system in the two frame images; a difference of the average values of the pixel values of respective pixel points in the two frame images; and a difference of the average values of the pixel values of respective pixel points in the monitored region set by the system in the two frame images.

Further, the network function module is further configured to receive a short message service message including the monitoring precision setting information or a multimedia information service message including the monitoring precision setting information sent by the user, to obtain the monitoring precision setting information therefrom and to transmit the same to the master controlling module; and the network function module is further configured to give an alarm to the user by one of the following manners: sending the multimedia information service message including an alarming information to the user, sending the short message service message including the alarming information to the user.

Further, the master controlling module is further configured to send each time period and its corresponding monitoring precision in the monitoring precision setting information to a storing module; and the monitoring terminal further comprises a storing module configured to store each time period and its corresponding monitoring precision sent by the master controlling module.

Further, the monitoring terminal uses Subscriber Identity Module card or Universal Subscriber Identity Module card as an identifier for identification.

Using the method of the present invention can enable the user to set the monitoring precision of the monitored place according to the user's practical requirement, make the monitoring precision automatically adapt to different monitoring situations, and not only decrease the false alarm, but also make the utilization of the monitoring terminal more convenient and meet the using requirement of the user.

### DESCRIPTION OF THE DRAWINGS

Figure 1 is a scheme of the composing of the modules in the monitoring terminal in an embodiment; and
Figure 2 is a flow chart showing the monitoring method of a monitoring terminal using different monitoring precisions in an embodiment.

### PREFERRED EMBODIMENTS OF THE PRESENT INVENTION

In the present invention, the user sets the monitoring precision for the monitoring terminal to make it use different monitoring precisions to monitor a monitored place at different time periods, which not only decreases the false alarm, but also makes the utilization of the monitoring terminal more convenient and meet the using requirement of the user.

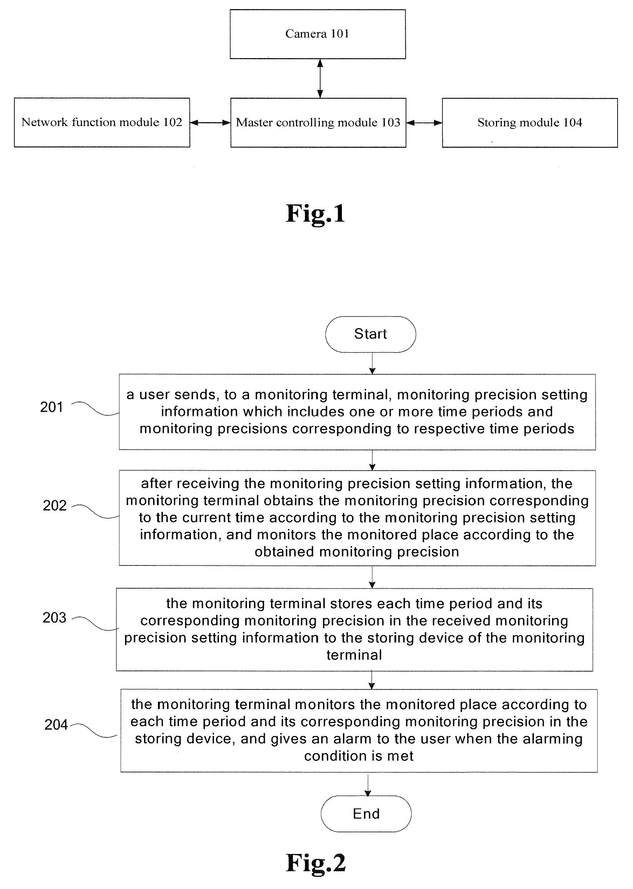

As shown in Figure 1, the monitoring terminal being set with the monitoring precision comprises the following modules: a camera 101, a network function module 102, a master controlling module 103 and a storing module 104, wherein the master controlling module 103 is connected to the camera 101, the network function module 102 and the storing module 104, respectively;
the camera 101 is configured to acquire the video image data of the monitored place and to transmit the same to the master controlling module;
the network function module 102 is further configured to receive a short message including the monitoring precision setting information or a multimedia information service message including the monitoring precision setting information sent by the user, to obtain the monitoring precision setting information therefrom, and to transmit the same to the master controlling module 103, wherein the monitoring precision setting information includes one or more time periods and monitoring precisions corresponding to respective time periods; the network function module 102 is further configured to give an alarm to the user after receiving the alarming instruction from the master controlling module 103, wherein this module gives an alarm to the user by one of the following manners: sending the multimedia information service message including an alarming information to the user, sending the short message including the alarming information to the user;
the master controlling module 103 is configured to, according to the received monitoring precision setting information sent from the network function module 102, apply, in each time period indicated in the received monitoring precision setting information, the corresponding monitoring precision to process the video image data acquired by the camera 101, and to send the alarming instruction to the network function module 102 when judging it meets an alarming condition; and is further configured to send each time period and its corresponding monitoring precision in the monitoring precision setting information to the storing module 104.

The above monitoring precision includes three level values, namely, high precision, medium precision and low precision;
the master controlling module 103 is further configured to, when using the high precision for monitoring, give an alarm to the user when judging the difference between two frame images captured by the camera with a time interval M set by the system exceeds the alarming threshold set by the system, or when judging the difference between two frame images captured by the camera with the interval of P frames exceeds the alarming threshold set by the system; is further configured to, when using the medium precision for monitoring, give an alarm to the user when judging the difference between two frame images captured by the camera with the time interval N set by the system exceeds the alarming threshold set by the system, or when judging the difference between two frame images captured by the camera with the interval of Q frames exceeds the alarming threshold set by the system; and is further configured to, when using the low precision, stop monitoring and give no alarm to the user; wherein the value of M is smaller than N, the value of P is smaller than Q, and the values of M, N, P and Q are determined by the monitoring terminal.

The storing module 104 is configured to store each time period and its corresponding monitoring precision sent by the master controlling module 103.

The monitoring terminal uses Subscriber Identity Module card or Universal Subscriber Identity Module card as an identifier for identification.

As shown in Figure 2, the method of setting the monitoring precision according to the time periods includes the following steps:
Step 201, a user sends, to a monitoring terminal, monitoring precision setting information which includes one or more time periods and monitoring precisions corresponding to respective time periods;
   the user can send a short message or a multimedia information service message including the monitoring precision setting information to the terminal;
Step 202, after receiving the monitoring precision setting information, the monitoring terminal obtains the monitoring precision corresponding to the current time according to the monitoring precision setting information, and monitors the monitored place according to the obtained monitoring precision;
Step 203, the monitoring terminal stores each time period and its corresponding monitoring precision in the received monitoring precision setting information to the storing device of the monitoring terminal;
Step 204, the monitoring terminal monitors the monitored place according to each time period and its corresponding monitoring precision in the storing device, and gives an alarm to the user when the alarming condition is met.

The specific set parameters of the monitoring precision can be set by the manufacturer when releasing it. Next, it will be illustrated by citing examples. For instance, the monitoring precision is classified into three types:
1. when the monitoring precision is a high precision (for instance, its corresponding monitoring precision parameter value is set to be 0), the monitoring terminal judges whether the difference between two frame images captured by the camera with the time interval (such as 1 second) set by the system exceeds the alarming threshold set by the system, or judges whether the difference between two frame images captured by the camera with the interval of a plurality of frames (such as 25 frames) exceeds the alarming threshold set by the system; if the alarming threshold is exceeded, the monitoring terminal gives an alarm to the user via the manners such as video phone or MMS;
2. when the monitoring precision is the medium precision (its corresponding monitoring precision parameter value is set to be 1), the monitoring terminal compares whether the difference between the two frame images at the beginning and at the end of a period (such as 1 minute) set by the system exceeds the alarming threshold set by the system, or judges whether the difference between two frame images captured by the camera with the interval of a plurality of frames (such as 1500 frames) exceeds the alarming threshold set by the system; if the alarming threshold is exceeded, the monitoring terminal gives an alarm to the user via the manners such as video phone or MMS;
3. when the monitoring precision is low precision (its corresponding monitoring precision parameter value is set to be 2), the monitoring terminal stops the monitoring and gives no alarm to the user.

The above situation is merely an example, and the monitoring precision also can be classified into more than three levels.
the difference between the two frame images is one of the following differences: a sum of differences of the pixel values of pixel points at respective corresponding positions in the two frame images; a sum of differences of the pixel values of pixel points at respective corresponding positions in a monitored region set by the system in the two frame images; a difference of the average values of the pixel values of respective pixel points in the two frame images; and a difference of the average values of the pixel values of respective pixel points in the monitored region set by the system in the two frame images.

The terminal gives an alarm to the user by one of the following manners: sending a multimedia information service message including an alarming information to the user, sending a short message service message including an alarming information to the user.

It should be understood that those skilled in the art of the present invention are able to make corresponding equivalent changes or alterations according to the technical solution of the present invention and its concept, and all the changes or substitution should belong to the scope of protection of the appended claims of the present invention.

### INDUSTRY APPLICATION

Using the terminal of the present invention can enable the user to set the monitoring precision of the monitored place according to the user's practical requirement, make the monitoring precision automatically adapt to different monitoring situations, and not only decrease the false alarm, but also make the utilization of the monitoring terminal more convenient and meet the using requirement of the user.

## Claims

1. A monitoring method using different monitoring precisions, **characterized in that**
a user sends, to a monitoring terminal, monitoring precision setting information which includes one or more time periods and monitoring precisions corresponding to respective time periods; and
according to the received monitoring precision setting information, the monitoring terminal applies, in each time period indicated in the received monitoring precision setting information, the corresponding monitoring precision to monitor a monitored place, and gives an alarm to the user when an alarming condition is met;
wherein the monitoring precision includes high precision and medium precision;
the monitoring terminal using the high precision for monitoring refers to giving an alarm to the user when judging the difference between two frame images captured by a camera with a time interval M set by a system exceeds an alarming threshold set by the system, or when judging the difference between two frame images captured by the camera with an interval of P frames exceeds the alarming threshold set by the system;
the monitoring terminal using the medium precision for monitoring refers to giving an alarm to the user when judging the difference between two frame images captured by the camera with a time interval N set by the system exceeds the alarming threshold set by the system, or when judging the difference between two frame images captured by the camera with an interval of Q frames exceeds the alarming threshold set by the system;
wherein, the value of M is smaller than N, the value of P is smaller than Q, and the values of M, N, P and Q are determined by the monitoring terminal.

2. The method according to Claim 1, **characterized in that**
the monitoring precision further includes low precision;
the monitoring terminal using the low precision for monitoring refers to stopping the monitoring and giving no alarm to the user.

3. The method according to Claim 2, **characterized in that**
the difference between the two frame images is one of the following differences: a sum of differences of the pixel values of pixel points at respective corresponding positions in the two frame images; a sum of differences of the pixel values of pixel points at respective corresponding positions in a monitored region set by the system in the two frame images; a difference of the average values of the pixel values of respective pixel points in the two frame images; and a difference of the average values of the pixel values of respective pixel points in the monitored region set by the system in the two frame images.

4. The method according to Claim 1, **characterized in that**
the user using one of the following manners to send the monitoring precision setting information to the monitoring terminal: sending a short message service message including the monitoring precision setting information to the terminal, sending a multimedia information service message including the monitoring precision setting information to the terminal; and
the terminal gives an alarm to the user through one of the following manners: sending a multimedia information service message including an alarming information to the user, sending a short message service message including an alarming information to the user.

5. A monitoring terminal using different monitoring precision, comprising the following modules: a camera, a network function module, and a master controlling module; the camera being configured to acquire video image data of a monitored place and to transmit the same to the master controlling module; **characterized in that**
the network function module is configured to receive monitoring precision setting information of a user which includes one or more time periods and monitoring precisions corresponding to respective time periods, and to transmit the same to the master controlling module; the network function module is further configured to give an alarm to the user after receiving an alarming instruction from the master controlling module; and
the master controlling module is configured to, according to the received monitoring precision setting information sent from the network function module, apply, in each time period indicated in the received monitoring precision setting information, the corresponding monitoring precision to process the video image data acquired by the camera, and to send the alarming instruction to the network function module when judging it meets an alarming condition;
wherein the monitoring precision includes high precision and medium precision;
the master controlling module is configured to, when using the high precision for monitoring, give an alarm to the user when judging the difference between two frame images captured by the camera with a time interval M set by a system exceeds an alarming threshold set by the system, or when judging the difference between two frame images captured by the camera with an interval of P frames exceeds the alarming threshold set by the system;
the master controlling module is further configured to, when using the medium precision for monitoring, give an alarm to the user when judging the difference between two frame images captured by the camera with a time interval N set by the system exceeds the alarming threshold set by the system, or when judging the difference between two frame images captured by the camera with an interval of Q frames exceeds the alarming threshold set by the system;
wherein the value of M is smaller than N, the value of P is smaller than Q, and the values of M, N, P and Q are determined by the monitoring terminal.

6. The terminal according to Claim 5, **characterized in that**
the monitoring precision further includes low precision;
the master controlling module is further configured to, when using the low precision for monitoring, stop monitoring and give no alarm to the user.

7. The terminal according to Claim 6, **characterized in that**
the difference between the two frame images is one of the following differences: a sum of differences of the pixel values of pixel points at respective corresponding positions in the two frame images; a sum of differences of the pixel values of pixel points at respective corresponding positions in a monitored region set by the system in the two frame images; a difference of the average values of the pixel values of respective pixel points in the two frame images; and a difference of the average values of the pixel values of respective pixel points in the monitored region set by the system in the two frame images.

8. The terminal according to Claim 5, **characterized in that**
the network function module is further configured to receive a short message service message including the monitoring precision setting information or a multimedia information service message including the monitoring precision setting information sent by the user, to obtain the monitoring precision setting information therefrom and to transmit the same to the master controlling module; and the network function module is further configured to give an alarm to the user by one of the following manners: sending the multimedia information service message including an alarming information to the user, sending the short message service message including the alarming information to the user.

9. The terminal according to Claim 5, **characterized in that**
the master controlling module is further configured to send each time period and its corresponding monitoring precision in the monitoring precision setting information to a storing module; and
the monitoring terminal further comprises a storing module configured to store each time period and its corresponding monitoring precision sent by the master controlling module.

10. The terminal according to Claim 5, **characterized in that**
the monitoring terminal uses Subscriber Identity Module card or Universal Subscriber Identity Module card as an identifier for identification.

## Patentansprüche

1. Überwachungsverfahren, das verschiedene Überwachungsgenauigkeiten verwendet, **dadurch gekennzeichnet, dass**
ein Benutzer Überwachungsgenauigkeits-Festlegungsinformationen, die eine oder mehrere Zeitspannen und den jeweiligen Zeitspannen entsprechende Überwachungsgenauigkeiten enthalten, an ein Überwachungsendgerät sendet; und
das Überwachungsendgerät entsprechend den empfangenen Überwachungsgenauigkeits-Festlegungsinformationen in jeder Zeitspanne, die in den empfangenen Überwachungsgenauigkeits-Festlegungsinformationen angegeben ist, die entsprechende Überwachungsgenauigkeit anwendet, um einen überwachten Ort zu überwachen, und dem Benutzer einen Alarm gibt, wenn eine Alarmierungsbedingung erfüllt ist;
wobei die Überwachungsgenauigkeit eine hohe Genauigkeit und eine mittlere Genauigkeit umfasst;
das Überwachungsendgerät, das die hohe Genauigkeit für die Überwachung verwendet, sich auf das Melden eines Alarms an den Benutzer bezieht, wenn beurteilt wird, dass die Differenz zwischen zwei Einzelbildern, die von einer Kamera innerhalb eines von einem System festgelegten Zeitintervalls M aufgenommen werden, einen von dem System festgelegten Alarmierungsschwellwert überschreitet, oder wenn beurteilt wird, dass die Differenz zwischen zwei Einzelbildern, die von der Kamera mit einem Abstand von P Einzelbildern aufgenommen werden, den von dem System festgelegten Alarmierungsschwellwert überschreiten;
das Überwachungsendgerät, das die mittlere Genauigkeit für die Überwachung verwendet, sich auf das Melden eines Alarms an den Benutzer bezieht, wenn beurteilt wird, dass die Differenz zwischen zwei Einzelbildern, die von der Kamera innerhalb eines von einem System festgelegten Zeitintervalls N aufgenommen werden, einen von dem System festgelegten Alarmierungsschwellwert überschreitet, oder wenn beurteilt wird, dass die Differenz zwischen zwei Einzelbildern, die von der Kamera mit einem Abstand von Q Einzelbildern aufgenommen werden, den von dem System festgelegten Alarmierungsschwellwert überschreiten;
wobei der Wert von M kleiner als N ist, der Wert von P kleiner als Q ist und die Werte von M, N, P und Q durch das Überwachungsendgerät bestimmt werden.

2. Verfahren nach Anspruch 1, **dadurch gekennzeichnet, dass**
die Überwachungsgenauigkeit ferner eine niedrige Genauigkeit umfasst;
das Überwachungsendgerät, das die niedrige Genauigkeit für die Überwachung verwendet, sich auf das Stoppen der Überwachung und keinen Alarm an den Benutzer Melden bezieht.

3. Verfahren nach Anspruch 2, **dadurch gekennzeichnet, dass**
die Differenz zwischen den zwei Einzelbildern eine der folgenden Differenzen ist: eine Summe von Differenzen der Bildpunktwerte von Bildpunkten an jeweils entsprechenden Positionen in den zwei Einzelbildern; eine Summe von Differenzen der Bildpunktwerte von Bildpunkten an jeweils entsprechenden Positionen in einem von dem System festgelegten überwachten Bereich in den zwei Einzelbildern; eine Differenz der Mittelwerte der Bildpunktwerte der jeweiligen Bildpunkte in den zwei Einzelbildern; und eine Differenz der Mittelwerte der Einzelbildwerte der jeweiligen Bildpunkte in dem von dem System festgelegten überwachten Bereich in den zwei Einzelbildern.

4. Verfahren nach Anspruch 1, **dadurch gekennzeichnet, dass**
der Benutzer eine der folgenden Arten verwendet, um die Überwachungsgenauigkeits-Festlegungsinformationen an das Überwachungsendgerät zu senden: Senden einer Kurznachrichtendienst-Nachricht mit den Überwachungsgenauigkeits-Festlegungsinformationen an das Endgerät, Senden einer Multimedia-Informationsdienst-Nachricht mit den Überwachurigsgenauigkeits-Festlegungsinformationen an das Endgerät; und
das Endgerät auf eine der folgenden Arten einen Alarm an den Benutzer meldet: Senden einer Multimedia-Informationsdienst-Nachricht mit einer Alarminformation an den Benutzer, Senden einer Kurznachrichtendienst-Nachricht mit einer Alarminformation an den Benutzer.

5. Überwachungsendgerät, das verschiedene Überwachungsgenauigkeiten verwendet, das die folgenden Module aufweist: eine Kamera, ein Netzwerkfunktionsmodul und ein Hauptsteuermodul; wobei die Kamera konfiguriert ist, um Videobilddaten eines überwachten Orts zu erfassen und diese an das Hauptsteuermodul zu senden; **dadurch gekennzeichnet, dass**
das Netzwerkfunktionsmodul konfiguriert ist, um Überwachungsgenauigkeits-Festlegungsinformationen eines Benutzers zu empfangen, die eine oder mehrere Zeitspannen und den jeweiligen Zeitspannen entsprechende Überwachungsgenauigkeiten enthalten, und diese an das Hauptsteuermodul zu senden; wobei das Netzwerkfunktionsmodul ferner konfiguriert ist, um dem Benutzer einen Alarm zu melden, nachdem es eine Alarmierungsanweisung von dem Hauptsteuermodul empfangen hat; und
wobei das Hauptmastermodul konfiguriert ist, um gemäß den empfangenen Überwachungsgenauigkeits-Festlegungsinformationen, die von dem Netzwerkfunktionsmodul gesendet wurden, in jeder Zeitspanne, die in den empfangenen Überwachungsgenauigkeits-Festlegungsinformationen angegeben ist, die entsprechende Überwachungsgenauigkeit anzuwenden, um die von der Kamera erfassten Videobilddaten zu verarbeiten, und um die Alarmierungsanweisung an das Netzwerkfunktionsmodul zu senden, wenn beurteilt wird, dass eine Alarmierungsbedingung erfüllt ist;
wobei die Überwachungsgenauigkeit eine hohe Genauigkeit und eine mittlere Genauigkeit umfasst;
das Hauptsteuermodul konfiguriert ist, um bei Verwendung der hohen Genauigkeit für die Überwachung dem Benutzer einen Alarm zu melden, wenn beurteilt wird, dass die Differenz zwischen zwei Einzelbildern, die von der Kamera innerhalb eines von einem System festgelegten Zeitintervalls M aufgenommen werden, einen von dem System festgelegten Alarmierungsschwellwert überschreitet, oder wenn beurteilt wird, dass die Differenz zwischen zwei Einzelbildern, die von der Kamera mit einem Abstand von P Einzelbildern aufgenommen werden, den von dem System festgelegten Alarmierungsschwellwert überschreiten;
das Hauptsteuermodul konfiguriert ist, um bei Verwendung der mittleren Genauigkeit für die Überwachung dem Benutzer einen Alarm zu melden, wenn beurteilt wird, dass die Differenz zwischen zwei Einzelbildern, die von der Kamera innerhalb eines von einem System festgelegten Zeitintervalls N aufgenommen werden, einen von dem System festgelegten Alarmierungsschwellwert überschreitet, oder wenn beurteilt wird, dass die Differenz zwischen zwei Einzelbildern, die von der Kamera mit einem Abstand von Q Einzelbildern aufgenommen werden, den von dem System festgelegten Alarmierungsschwellwert überschreiten;
wobei der Wert von M kleiner als N ist, der Wert von P kleiner als Q ist und die Werte von M, N, P und Q durch das Überwachungsendgerät bestimmt werden.

6. Endgerät nach Anspruch 5, **dadurch gekennzeichnet, dass**
die Überwachungsgenauigkeit ferner eine niedrige Genauigkeit umfasst;
das Hauptsteuermodul ferner konfiguriert ist, um bei Verwendung der niedrigen Genauigkeit für die Überwachung die Überwachung zu stoppen und keinen Alarm an den Benutzer zu melden.

7. Endgerät nach Anspruch 6, **dadurch gekennzeichnet, dass**
die Differenz zwischen den zwei Einzelbildern eine der folgenden Differenzen ist: eine Summe von Differenzen der Bildpunktwerte von Bildpunkten an jeweils entsprechenden Positionen in den zwei Einzelbildern; eine Summe von Differenzen der Bildpunktwerte von Bildpunkten an jeweils entsprechenden Positionen in einem von dem System festgelegten überwachten Bereich in den zwei Einzelbildern; eine Differenz der Mittelwerte der Bildpunktwerte der jeweiligen Bildpunkte in den zwei Einzelbildern; und eine Differenz der Mittelwerte der Einzelbildwerte der jeweiligen Bildpunkte in dem von dem System festgelegten überwachten Bereich in den zwei Einzelbildern.

8. Endgerät nach Anspruch 5, **dadurch gekennzeichnet, dass**
das Netzwerkfunktionsmodul ferner konfiguriert ist, um eine Kurznachrichtendienst-Nachricht mit den Überwachungsgenauigkeits-Festlegungsinformationen oder eine Multimedia-Informationsdienst-Nachricht mit den Überwachungsgenauigkeits-Festlegungsinformationen, die von dem Benutzer gesendet wird, zu empfangen, um die Überwachungsgenauigkeits-Festlegungsinformationen daraus zu gewinnen und diese an das Hauptsteuermodul zu senden; und das Netzwerkfunktionsmodul ferner konfiguriert ist, um auf eine der folgenden Arten einen Alarm an den Benutzer zu melden: Senden der Multimedia-Informationsdienst-Nachricht mit einer Alarminformation an den Benutzer, Senden der Kurznachrichtendienst-Nachricht mit der Alarminformation an den Benutzer.

9. Endgerät nach Anspruch 5, **dadurch gekennzeichnet, dass**
das Hauptsteuermodul ferner konfiguriert ist, um jede Zeitspanne und ihre entsprechende Überwachungsgenauigkeit in den Überwachungsgenauigkeits-Festlegungsinformationen an ein Speichermodul zu senden; und
das Überwachungsmodul ferner ein Speichermodul aufweist, das konfiguriert ist, um jede Zeitspanne und ihre entsprechende Überwachungsgenauigkeit, die von dem Hauptsteuermodul gesendet werden, zu speichern.

10. Endgerät nach Anspruch 5, **dadurch gekennzeichnet, dass**
das Überwachungsendgerät eine Teilnehmerkennungsmodulkarte oder eine universelle Teilnehmerkennungsmodulkarte als eine Kennung für die Identifikation verwendet.

## Revendications

1. Procédé de surveillance utilisant différentes précisions de surveillance, **caractérisé en ce que**
un utilisateur envoie, à un terminal de surveillance, des informations d'établissement de précision de surveillance qui incluent une ou plusieurs périodes de temps et des précisions de surveillance correspondant à des périodes de temps respectives ; et
selon les informations d'établissement de précision de surveillance reçues, le terminal de surveillance applique, dans chaque période de temps indiquée dans les informations d'établissement de précision de surveillance reçues, la précision de surveillance correspondante pour surveiller un endroit surveillé, et donne une alarme à l'utilisateur lorsqu'une condition d'alarme est satisfaite ;
dans lequel la précision de surveillance inclut une précision élevée et une précision moyenne ;
le terminal de surveillance utilisant la précision élevée pour surveiller se rapporte au fait de donner une alarme à l'utilisateur lors du jugement que la différence entre deux images de trame capturées par une caméra avec un intervalle de temps M établi par un système dépasse un seuil d'alarme établi par le système, ou lors du jugement que la différence entre deux images de trame capturées par la caméra avec un intervalle de P trames dépasse le seuil d'alarme établi par le système ;
le terminal de surveillance utilisant la précision moyenne pour surveiller se rapporte au fait de donner une alarme à l'utilisateur lors du jugement que la différence entre deux images de trame capturées par la caméra avec un intervalle de temps N établi par le système dépasse le seuil d'alarme établi par le système, ou lors du jugement que la différence entre deux images de trame capturées par la caméra avec un intervalle de Q trames dépasse le seuil d'alarme établi par le système ;
dans lequel, la valeur de M est inférieure à N, la valeur de P est inférieure à Q, et les valeurs de M, N, P et Q sont déterminées par le terminal de surveillance.

2. Procédé selon la revendication 1, **caractérisé en ce que**
la précision de surveillance inclut en outre une précision faible ;
le terminal de surveillance utilisant la précision faible pour surveiller se rapporte au fait d'arrêter la surveillance et de ne donner aucune alarme à l'utilisateur.

3. Procédé selon la revendication 2, **caractérisé en ce que**
la différence entre les deux images de trame est une des différences suivantes : une somme de différences des valeurs de pixel de points de pixel au niveau de positions correspondantes respectives dans les deux images de trame ; une somme de différences des valeurs de pixel de points de pixel au niveau de positions correspondantes respectives dans une région surveillée établie par le système dans les deux images de trame ; une différence des valeurs moyennes des valeurs de pixel de points de pixel respectifs dans les deux images de trame ; et une différence des valeurs moyennes des valeurs de pixel de points de pixel respectifs dans la région surveillée établie par le système dans les deux images de trame.

4. Procédé selon la revendication 1, **caractérisé en ce que**
l'utilisateur utilisant une des manières suivantes pour envoyer les informations d'établissement de précision de surveillance au terminal de surveillance : l'envoi d'un message de service de messages courts incluant les informations d'établissement de précision de surveillance au terminal, l'envoi d'un message de service d'information multimédia incluant les informations d'établissement de précision de surveillance au terminal ; et
le terminal donne une alarme à l'utilisateur par le biais d'une des manières suivantes : l'envoi d'un message de service d'information multimédia incluant une information d'alarme à l'utilisateur, l'envoi d'un message de service de messages courts incluant une information d'alarme à l'utilisateur.

5. Terminal de surveillance utilisant différentes précisions de surveillance, comprenant les modules suivantes : une caméra, un module de fonction de réseau, et un module de commande maître ; la caméra étant configurée pour acquérir des données d'image vidéo d'un endroit surveillé et pour les transmettre au module de commande maître ; **caractérisé en ce que**
le module de fonction de réseau est configuré pour recevoir des informations d'établissement de précision de surveillance d'un utilisateur qui incluent une ou plusieurs périodes de temps et des précisions de surveillance correspondant à des périodes de temps respectives, et pour les transmettre au module de commande maître ; le module de fonction de réseau est en outre configuré pour donner une alarme à l'utilisateur après la réception d'une instruction d'alarme en provenance du module de commande maître ; et
le module de commande maître est configuré pour, selon les informations d'établissement de précision de surveillance reçues envoyées depuis le module de fonction de réseau, appliquer, dans chaque période de temps indiquée dans les informations d'établissement de précision de surveillance reçues, la précision de surveillance correspondante pour traiter les données d'image vidéo acquises par la caméra, et pour envoyer l'instruction d'alarme au module de fonction réseau lors du jugement qu'elles satisfont à une condition d'alarme ;
dans lequel la précision de surveillance inclut une précision élevée et une précision moyenne ;
le module de commande maître est configuré pour, lors de l'utilisation de la précision élevée pour surveiller, donner une alarme à l'utilisateur lors du jugement que la différence entre deux images de trame capturées par la caméra avec un intervalle de temps M établi par un système dépasse un seuil d'alarme établi par le système, ou lors du jugement que la différence entre deux images de trame capturées par la caméra avec un intervalle de P trames dépasse le seuil d'alarme établi par le système ;
le module de commande maître est en outre configuré pour, lors de l'utilisation de la précision moyenne pour surveiller, donner une alarme à l'utilisateur lors du jugement que la différence entre deux images de trame capturées par la caméra avec un intervalle de temps N établi par le système dépasse le seuil d'alarme établi par le système, ou lors du jugement que la différence entre deux images de trame capturées par la caméra avec un intervalle de Q trames dépasse le seuil d'alarme établi par le système ;
dans lequel, la valeur de M est inférieure à N, la valeur de P est inférieure à Q, et les valeurs de M, N, P et Q sont déterminées par le terminal de surveillance.

6. Terminal selon la revendication 5, **caractérisé en ce que**
la précision de surveillance inclut en outre une précision faible ;
le module de commande maître est en outre configuré pour, lors de l'utilisation de la précision faible pour surveiller, arrêter la surveillance et ne donner aucune alarme à l'utilisateur.

7. Terminal selon la revendication 6, **caractérisé en ce que**
la différence entre les deux images de trame est une des différences suivantes : une somme de différences des valeurs de pixel de points de pixel au niveau de positions correspondantes respectives dans les deux images de trame ; une somme de différences des valeurs de pixel de points de pixel au niveau de positions correspondantes respectives dans une région surveillée établie par le système dans les deux images de trame ; une différence des valeurs moyennes des valeurs de pixel de points de pixel respectifs dans les deux images de trame ; et une différence des valeurs moyennes des valeurs de pixel de points de pixel respectifs dans la région surveillée établie par le système dans les deux images de trame.

8. Terminal selon la revendication 5, **caractérisé en ce que**
le module de fonction de réseau est en outre configuré pour recevoir un message de service de messages courts incluant les informations d'établissement de précision de surveillance ou un message de service d'information multimédia incluant les informations d'établissement de précision de surveillance envoyées par l'utilisateur, pour obtenir les informations d'établissement de précision de surveillance à partir de celui-ci et pour le transmettre au module de commande maître ; et le module de fonction de réseau est en outre configuré pour donner une alarme à l'utilisateur par une des manières suivantes : l'envoi du message de service d'information multimédia incluant une information d'alarme à l'utilisateur, l'envoi du message de service de messages courts incluant l'information d'alarme à l'utilisateur.

9. Terminal selon la revendication 5, **caractérisé en ce que**
le module de commande maître est en outre configuré pour envoyer chaque période de temps et sa précision de surveillance correspondante dans les informations d'établissement de précision de surveillance à un module de stockage ; et
le terminal de surveillance comprend en outre un module de stockage configuré pour stocker chaque période de temps et sa précision de surveillance correspondante envoyées par le module de commande maître.

10. Terminal selon la revendication 5, **caractérisé en ce que**
le terminal de surveillance utilise une carte de Module d'identité d'abonné ou une carte de Module d'identité d'abonné universel comme un identificateur pour l'identification.
